# EUROPÄISCHE PATENTSCHRIFT

(11) **EP 3 587 748 B1**
(45) Veröffentlichungstag und Bekanntmachung des Hinweises auf die Patenterteilung: **24.03.2021**
(21) Anmeldenummer: 19182755.9
(22) Anmeldetag: 27.06.2019
(51) Int. Cl.: F01D 25/14, F01D 25/26

(54) **GEHÄUSESTRUKTUR FÜR EINE STRÖMUNGSMASCHINE, STRÖMUNGSMASCHINE UND VERFAHREN ZUM KÜHLEN EINES GEHÄUSEABSCHNITTS EINER GEHÄUSESTRUKTUR EINER STRÖMUNGSMASCHINE**
HOUSING STRUCTURE FOR A TURBO ENGINE, TURBO ENGINE AND METHOD FOR COOLING A HOUSING SECTION OF A STRUCTURE OF A TURBO ENGINE
STRUCTURE DE BOÎTIER POUR UNE TURBOMACHINE, TURBOMACHINE ET PROCÉDÉ DE REFROIDISSEMENT D'UNE SECTION DE BOÎTIER D'UNE STRUCTURE DE BOÎTIER D'UNE TURBOMACHINE

(30) Priorität: 28.06.2018 DE 102018210598
(43) Veröffentlichungstag der Anmeldung: 01.01.2020
(73) Patentinhaber: MTU Aero Engines AG, 80995 München (DE)
(72) Erfinder: Feldmann, Manfred, 82223 Eichenau (DE)

(56) Entgegenhaltungen:
- EP-A1- 2 518 278
- EP-A1- 3 199 761
- DE-A1-102017 112 426
- US-A1- 2016 017 750
- US-B1- 6 179 557

## Beschreibung

Die vorliegende Erfindung betrifft eine Gehäusestruktur für eine Strömungsmaschine, insbesondere für eine Turbomaschine, insbesondere für eine Turbinenstufe einer Turbomaschine, wobei die Gehäusestruktur dazu ausgebildet ist, einen Hauptströmungskanal der Strömungsmaschine, in dem Lauf- und Leitschaufeln angeordnet sind, zumindest teilweise ringförmig zu umgeben und die Strömungsmaschine gegenüber der Umgebung abzugrenzen, wobei die Gehäusestruktur eine äußere, durch wenigstens einen Gehäuseteil gebildete Gehäusewand und eine innere Wand aufweist und wenigstens einen zumindest teilweise in einem Volumen zwischen der Gehäusewand und der inneren Wand verlaufenen Kühlluftkanal zur Kühlung eines zu kühlenden Gehäuseabschnitts der Gehäusewand umfasst.

Ferner betrifft die Erfindung eine Strömungsmaschine, insbesondere eine Turbomaschine, insbesondere eine Gasturbine, insbesondere eine Niederdruckturbine, mit einer vorbeschriebenen Gehäusestruktur.

Des Weiteren betrifft die Erfindung ein Verfahren zum Kühlen eines Gehäuseabschnitts einer Gehäusestruktur derartigen Strömungsmaschine mit einer vorbeschriebenen Gehäusestruktur.

Strömungsmaschinen mit gattungsgemäßen Gehäusestrukturen sind aus dem Stand der Technik grundsätzlich bekannt, wobei verschiedene Konzepte hinsichtlich der Kühlung von Gehäuseabschnitten derartiger Gehäusestrukturen, insbesondere die Kühlluftführung betreffend, bekannt sind, beispielsweise aus der EP 2 725 203 A1, der US 6,179,557 B1, der EP2518278A1, der US20160017750A1 oder der DE102017112426A1.

Je besser ein zu kühlender Gehäuseabschnitt einer Gehäusewand der Gehäusestruktur gekühlt werden kann, umso geringer sind in der Regel die während des Betriebs auf die Gehäusewand wirkenden thermischen Belastungen, was sich in der Regel vorteilhaft auf die Gehäusewand auswirkt, beispielsweise auf deren Lebensdauer und infolgedessen auf deren Auslegung und Dimensionierung.

Eine Aufgabe einer Ausführung der vorliegenden Erfindung ist es daher, die während des Betriebs auftretenden und auf die Gehäusewand wirkenden thermischen Belastungen zu reduzieren.

Diese Aufgabe wird durch eine Gehäusestruktur mit den Merkmalen von Anspruch 1, durch eine Strömungsmaschine mit den Merkmalen von Anspruch 9 sowie durch ein Verfahren mit den Merkmalen des Anspruchs 11 gelöst. Vorteilhafte Ausführungsformen der Erfindung sind Gegenstand der Unteransprüche.

Eine gemäß der vorliegenden Erfindung ausgebildete Gehäusestruktur für eine Strömungsmaschine, insbesondere für eine Turbomaschine, insbesondere für eine Turbinenstufe einer Turbomaschine, ist dazu ausgebildet, einen Hauptströmungskanal der Strömungsmaschine, in dem Lauf- und Leitschaufeln angeordnet sind, zumindest teilweise ringförmig zu umgeben, insbesondere in axialer Richtung und zumindest teilweise in Umfangsrichtung, um die Strömungsmaschine gegenüber der Umgebung abzugrenzen.

Dabei weist die Gehäusestruktur eine äußere, durch wenigstens einen Gehäuseteil gebildete Gehäusewand und eine innere Wand auf und umfasst wenigstens einen zumindest teilweise in einem Volumen zwischen der Gehäusewand und der inneren Wand verlaufenen Kühlluftkanal zur Kühlung eines zu kühlenden Gehäuseabschnitts der Gehäusewand.

Die Gehäusewand ist zur Abgrenzung der Strömungsmaschine gegenüber der Umgebung ausgebildet, insbesondere in radialer Richtung und zumindest teilweise in Umfangsrichtung. Die innere Wand ist in radialer Richtung innerhalb der Gehäusewand und in radialer Richtung beabstandet zur Gehäusewand angeordnet und dazu ausgebildet, den Hauptströmungskanal mit den darin angeordneten Lauf- und Leitschaufeln zumindest teilweise zu begrenzen, insbesondere in radialer Richtung und zumindest teilweise in Umfangsrichtung.

Der zu kühlende Gehäuseabschnitt weist, bezogen auf eine Hauptströmungsrichtung, mit welcher eine Hauptströmung den Hauptströmungskanal durchströmt, ein stromaufwärtiges und ein stromabwärtiges Ende auf.

Der Kühlluftkanal weist einen Kühlluftkanaleinlass zur Zufuhr von Kühlluft in den Kühlluftkanal und einen Kühlluftkanalauslass zum Austritt von Kühlluft aus dem Kühlluftkanal auf, wobei der Kühlluftkanal wenigstens einen Abschnitt aufweist, in welchem dem Kühlluftkanal über den Kühlluftkanaleinlass zugeführte Kühlluft in Richtung des stromaufwärtigen Endes des zu kühlenden Gehäuseabschnitts strömt.

Erfindungsgemäß ist der Kühlluftkanaleinlass im Bereich des stromabwärtigen Endes des zu kühlenden Gehäuseabschnitts oder stromabwärts von diesem angeordnet, insbesondere am stromabwärtigen Ende des zu kühlenden Gehäuseabschnitts oder stromabwärts vom stromabwärtigen Ende des zu kühlenden Gehäuseabschnitts.

Der Begriff "Strömungsmaschine" bezeichnet vorliegend eine von einem Fluid durchströmbare Vorrichtung, mittels welcher in einem die Strömungsmaschine durchströmenden Fluid gespeicherte Energie in kinetische Energie umgewandelt werden kann oder umgekehrt kinetische Energie in Fluidenergie eines die Strömungsmaschine durchströmenden Fluids, wobei die Energieübertragung üblicherweise mithilfe entsprechender, von dem Fluid an- und insbesondere umströmbarer Profile wie Rotorblättern, Flügeln oder Schaufeln oder dergleichen erfolgt, die derart profiliert sind, dass durch die Umströmung mit dem Fluid an den jeweiligen Profilen eine Druckdifferenz zwischen Vorder- und Rückseite entsteht.

Eine "Turbomaschine" im Sinne der vorliegenden Erfindung ist eine als Kraftmaschine ausgebildete Strömungsmaschine, d.h. eine Strömungsmaschine, mittels welcher die in einem die Strömungsmaschine durchströmenden Fluid gespeicherte Energie in kinetische Energie umgewandelt werden kann.

Als "Turbine" wird vorliegend eine "Turbomaschine" verstanden, bei welcher die in einem die Strömungsmaschine durchströmenden Fluid gespeicherte Energie genutzt wird, um eine Welle anzutreiben.

Der Begriff "Laufschaufel" bezeichnet vorliegend ein Strömungsprofil, welches an einer drehbaren Welle befestigt ist und durch eine Rotation der zugehörigen Welle relativ gegenüber einer die drehbaren Welle zumindest teilweise umgebenden Gehäusestruktur bewegbar ist.

Eine "Leitschaufel" im Sinne der vorliegenden Erfindung ist ein Strömungsprofil, welches ortsfest gegenüber der Gehäusestruktur ist und insbesondere zumindest teilweise in der Gehäusestruktur gelagert ist.

Als "Hauptströmungskanal" wird vorliegend ein von dem die Strömungsmaschine durchströmenden Fluid durchströmter Strömungskanal bezeichnet, in welchem die Energieumwandlung von Fluidenergie in kinetische Energie hauptsächlich stattfindet.

Die Richtungsangabe "axial" bezieht sich vorliegend jeweils in fachüblicher Weise auf eine Richtung parallel zur Rotations- bzw. (Haupt)Maschinenachse der Strömungsmaschine, insbesondere bei einer Turbomaschine, die Richtungsangabe "Umfangsrichtung" entsprechend auf eine Rotationsrichtung um diese Rotations- bzw. (Haupt)Maschinenachse, die Richtungsangabe "radial" auf eine Richtung, die senkrecht auf der axialen und Umfangsrichtung steht. Die Richtungsangabe "tangential" bezieht sich entsprechend auf eine Richtung, welche senkrecht auf der axialen Richtung und der radialen Richtung steht.

Die Richtungsangaben "stromabwärts" und "stromaufwärts" beziehen sich vorliegend stets auf die Richtung einer Hauptströmung in einem Hauptströmungskanal einer zugehörigen Strömungsmaschine, mit welcher der Hauptströmungskanal während eines Betriebs der Strömungsmaschine durchströmt wird.

Sämtliche Richtungsangaben beziehen sich dabei vorliegend jeweils auf einen in einer Strömungsmaschine, insbesondere in einer Turbomaschine, eingebauten Zustand der einzelnen Bauteile bzw. im Zusammenhang mit einer Strömungsmaschine, insbesondere Turbomaschine, auf einen funktionsgemäßen Verwendungszustand.

Der Ausdruck "zumindest teilweise" im Zusammenhang mit einer Richtungsangabe bedeutet dabei, dass der zugehörige resultierende Richtungsvektor einen Anteil der nach dem Ausdruck "zumindest teilweise" angegebenen Richtung aufweist.

Mit dem Begriff "Wand" wird vorliegend ein Bauteil bezeichnet, insbesondere ein während des Betriebs einer Strömungsmaschine feststehendes, ortsfestes Bauteil, welches wenigstens eine zumindest teilweise anströmbare oder angeströmte oder umströmbare oder umströmte Fläche aufweist, wobei eine Wand insbesondere in wenigstens zwei Richtungen, vorliegend insbesondere in axialer Richtung und in Umfangsrichtung, eine deutlich größere Erstreckung aufweist als in einer dritten Richtung, vorliegend insbesondere in radialer Richtung.

Als "Gehäusewand" wird vorliegend dementsprechend eine Wand eines Gehäuses bezeichnet.

In einer Ausführung der vorliegenden Erfindung erstreckt sich die Gehäusewand einer erfindungsgemäßen Gehäusestruktur insbesondere zumindest teilweise in axialer Richtung und wenigstens teilweise in Umfangsrichtung und ist zur Abgrenzung der Strömungsmaschine gegenüber der Umgebung wenigstens teilweise in radialer Richtung und wenigstens teilweise in Umfangsrichtung ausgebildet.

Durch die Anordnung des Kühllufteinlasses im Bereich des stromabwärtigen Endes des zu kühlenden Gehäuseabschnitts oder stromabwärts davon und eine zumindest teilweise entgegen einer Hauptströmungsrichtung geführten Kühlluft, muss zur Kühlluftzufuhr ein Austrittsdruck in der Stufe der Strömungsmaschine überwunden werden, welche von dem zu kühlenden Gehäuseabschnitt zumindest teilweise umgeben ist. Dadurch lässt sich auf besonders einfache Art und Weise die Kühlung eines Gehäuseabschnitts um eine Rotorstufe erreichen, insbesondere in einer Niederdruckturbine.

Ein weiterer Vorteil einer erfindungsgemäßen Gehäusestruktur, ist, dass ein sogenannter "Lieferdruck" der Kühlluft, mit welcher die Kühlluft in den Kühlluftkanal eingebracht werden kann, bei einer erfindungsgemäßen Gehäusestruktur nicht vom Verschleiß anderer Module der Strömungsmodule abhängig ist, wie dies beispielsweise der Fall bei einer stromaufwärts zugeführten Kühlluft ist, welche zuvor bereits ein oder mehrere Turbinenstufen durchströmt hat.

In einer Ausführung der vorliegenden Erfindung ist die innere Wand insbesondere durch einen Mantelring oder durch wenigstens ein Mantelringsegment gebildet, insbesondere durch einen sich zumindest teilweise in axialer Richtung und zumindest teilweise in Umfangsrichtung erstreckenden Mantelring oder durch wenigstens ein entsprechend ausgebildetes Mantelringsegment, wobei die innere Wand auch durch mehrere, zu einem Mantelring zusammengesetzte Mantelringsegmente gebildet sein kann, insbesondere durch zu einem in Umfangsrichtung geschlossenen Mantelring zusammengesetzte Mantelringsegmente. Hierdurch lässt sich auf einfache Art und Weise eine radiale Begrenzung des Hauptströmungskanals nach außen erreichen.

Da die innere Wand zumindest teilweise den Hauptströmungskanal begrenzt, ist diese insbesondere bei einer für eine Gasturbine vorgesehenen Gehäusestruktur, bei welcher der Hauptströmungskanal von sehr heißem Gas durchströmt wird, hohen Temperaturen ausgesetzt. In einer vorteilhaften Ausführung weist die innere Wand daher bevorzugt ein hochtemperaturbeständiges Material auf oder besteht daraus, wobei die innere Wand bevorzugt Metall aufweist oder daraus besteht, insbesondere ein hochtemperaturfestes Metall. Hierdurch lässt sich eine besonders beständige und haltbare eine radiale Begrenzung des Hauptströmungskanals nach außen erreichen.

In einer Ausführung der vorliegenden Erfindung ist der zu kühlende Gehäuseabschnitt insbesondere ein Gehäuseabschnitt, der dazu ausgebildet ist, zumindest eine Rotorstufe zumindest teilweise zu umgeben, wobei wenigstens ein stromabwärtiges Ende des zugehörigen Gehäuseteils in diesem Fall vorzugsweise durch einen oder mehrere Gehäusehaken zur Aufnahme von Leitschaufelhaken von Leitschaufeln einer nachfolgenden, stromabwärtigen Statorstufe, insbesondere eines Leitgitters, gebildet ist. Hierdurch kann auf besonders einfache Art und Weise Kühlluft aus einem äußeren Bereich der Strömungsmaschine dem Kühlluftkanal zugeführt werden, insbesondere Kühlluft aus einem Bereich radial außerhalb von den Leitschaufeln einer Statorstufe, welche insbesondere noch keine Aufheizung in einer Stufe einer Strömungsmaschine erfahren hat.

In einer Ausführung der vorliegenden Erfindung ist der Kühlluftkanaleinlass im Gehäuseteil angeordnet und insbesondere durch eine Durchgangsöffnung im Gehäuseteil gebildet, insbesondere durch eine Durchgangsbohrung, die insbesondere stromabwärts des zu kühlenden Gehäuseabschnitts in das Gehäuseteil eingebracht ist, so dass dem Kühlluftkanal insbesondere Kühlluft aus einer nachfolgenden stromabwärts vom zu kühlenden Gehäuseabschnitt angeordneten Stufe, zugeführt werden kann. Hierdurch kann auf besonders einfache Art und Weise und insbesondere ohne eine übermäßige Schwächung der Gehäusestruktur, insbesondere ohne eine Schwächung der Gehäusestruktur im Bereich des Rotors, in welchem eine hohe Durchschlagfestigkeit von Bedeutung ist, eine ausreichende Kühlluftzufuhr für eine effiziente Kühlung des zu kühlenden Gehäuseabschnitts erreicht werden. Insbesondere kann auf diese Art und Weise der zu kühlende Gehäuseabschnitt über eine möglichst große Kühllänge in axialer Richtung gekühlt werden, insbesondere ohne Kühllufteinlässe in der Gehäusestruktur im Bereich des Rotors vorsehen zu müssen, welche sich in der Regel nachteilig auf die Durchschlagsicherheit der Gehäusestruktur im Bereich des Rotors auswirken.

In einer Ausführung der vorliegenden Erfindung weist der zu kühlende Gehäuseabschnitt im durchschlagsicherheitsrelevanten Bereich eine geschlossene Außenwand auf, d.h. keinen Kühlluftkanaleinlass und/oder -auslass, insbesondere keinen Durchbruch oder dergleichen, um eine Schwächung des zu kühlenden Gehäuseabschnitts in diesem Bereich zu vermeiden und insbesondere die Durchschlagfestigkeit in diesem Bereich zu verbessern.

Als "Rotorstufe" wird vorliegend ein axialer Abschnitt einer Strömungsmaschine, insbesondere einer Turbomaschine, insbesondere einer Turbine, bezeichnet, in welchem sich Laufschaufeln befinden, insbesondere mehrere, in Umfangsrichtung gleichmäßig verteilt angeordnete Laufschaufeln, die an einer drehbaren Welle befestigt sind und sich in radialer Richtung von der Welle nach außen erstrecken und einen Laufschaufelkranz bilden.

Umgibt der zu kühlende Gehäuseabschnitt eine Rotorstufe, ist in einer Ausführung der vorliegenden Erfindung der Kühlluftkanaleinlass insbesondere derart eingebracht, dass dem Kühlluftkanal Kühlluft aus einem Bereich einer nachfolgenden Statorstufe zugeführt werden kann, insbesondere über einen oder mehreren, am stromabwärtigen Ende des Gehäuseteils im Gehäuseteil vorgesehene Gehäusehaken. D.h. in einer Ausführung der vorliegenden Erfindung ist der Kühlluftkanaleinlass, insbesondere eine den Kühlluftkanaleinlass bildende Durchgangsöffnung oder Durchgangsbohrung, insbesondere in einen Gehäusehaken eingebracht und/oder verläuft durch einen Gehäusehaken, mittels welchem wenigstens eine Leitschaufel einer nachfolgenden Statorstufe im Gehäuse gelagert ist, wobei für eine verbesserte Kühlluftzufuhr in diesem Bereich der zugehörige Leitschaufelhaken wenigstens eine Ausnehmung aufweisen kann. Hierdurch lässt sich eine besonders effiziente Kühlluftführung erreichen.

Als "Statorstufe" wird vorliegend ein axialer Abschnitt einer Strömungsmaschine, insbesondere einer Turbomaschine, insbesondere einer Turbine, bezeichnet, in welchem sich Leitschaufeln befinden, insbesondere mehrere, in Umfangsrichtung gleichmäßig verteilt angeordnete Leitschaufeln, die ortsfest gegenüber der sie umgebenden Gehäusestruktur gelagert sind und insbesondere zumindest teilweise in der Gehäusestruktur, wobei sich die Leitschaufeln insbesondere in radialer Richtung vom Gehäuse nach innen erstrecken und einen Leitschaufelkranz bilden.

In einer Ausführung der vorliegenden Erfindung ist der Kühlluftkanalauslass insbesondere ebenfalls im Bereich des stromabwärtigen Endes des zu kühlenden Gehäuseabschnitts, am stromabwärtigen Ende des zu kühlenden Gehäuseabschnitts oder stromabwärts vom stromabwärtigen Ende des zu kühlenden Gehäuseabschnitts angeordnet. Hierdurch lässt sich eine besonders effiziente Kühlluftführung erreichen. Insbesondere muss in diesem Fall zum Austritt aus dem Kühlkanal nur ein am Austritt der am stromabwärtigen Ende der zugehörigen Stufe, deren umgebender Gehäuseabschnitt zu kühlen ist, anliegender Druck überwunden werden und nicht der am Eintritt in diese Stufe anliegender Druck. Dies ermöglicht einen Betrieb der Kühlluftführung mit einem geringeren Kühlluftdruck, so dass bereits mit einer moderaten Anhebung des Drucks in einer nachfolgenden Stufe der Strömungsmaschine ein ausreichender Kühlluftdruck erreicht werden kann. Insbesondere lässt sich bereits mit einer nur moderaten Anhebung eines Drucks in einer stromabwärts von der Rotorstufe angeordneten Leitschaufelkavität, ein für eine ausreichende Kühlung erforderlicher Druck der Kühlluftzufuhr erreichen.

Insbesondere ermöglicht eine derartige Ausgestaltung eine zumindest teilweise stromaufwärts geführte Kühlluft mit einer moderaten, zusätzlichen Leckage an den radial äußeren Enden der Leitschaufeln aus der nachfolgenden, stromabwärtigen Statorstufe, wobei diese Ausgestaltung insbesondere auf einfache Art und Weise die Bereitstellung eines für die Kühlluftzufuhr in den Kühlkanal ausreichenden Drucks für eine ausreichende Kühlung der stromaufwärtigen Rotorstufe ermöglicht.

Umgibt der zu kühlende Gehäuseabschnitt eine Rotorstufe, ist in einer Ausführung der vorliegenden Erfindung der Kühlluftkanalauslass insbesondere axial auf Höhe eines zugehörigen, in radialer Richtung liegenden Gehäusehakens angeordnet, insbesondere in radialer Richtung innerhalb von diesem Gehäusehaken. Hierdurch lässt sich auf besonders einfache Art und Weise eine vorteilhafte und insbesondere effiziente Kühlluftführung erreichen.

Der Kühlluftkanal weist einen ersten Abschnitt und einen zweiten Abschnitt auf, wobei die Gehäusestruktur, insbesondere der Kühlluftkanal, derart ausgebildet ist, dass dem Kühlluftkanal über den Kühlluftkanaleinlass zugeführte Kühlluft im ersten Abschnitt in Richtung des stromaufwärtigen Endes des zu kühlenden Abschnitts strömt, insbesondere direkt angrenzend an den zu kühlenden Gehäuseabschnitt in axialer Richtung entgegen einer Hauptströmungsrichtung strömt, und im zweiten Abschnitt in Richtung des stromabwärtigen Endes des zu kühlenden Gehäuseabschnitts, wobei eine Kühlluftströmung im Übergang vom ersten Abschnitt zum zweiten Abschnitt umgelenkt wird, insbesondere um 180°. Hierdurch lässt sich eine besonders effiziente Kühlung des zu kühlenden Gehäuseabschnitts erreichen, da die noch kalte die Kühlluft zuerst am zu kühlenden Gehäuseabschnitt, insbesondere in axialer Richtung, entlanggeführt wird.

In einer Weiterbildung der vorliegenden Erfindung ist die Gehäusestruktur insbesondere derart ausgebildet, dass die Kühlluftströmung insbesondere im Bereich des stromaufwärtigen Endes des zu kühlenden Gehäuseabschnitts umlenkbar ist und/oder dort umgelenkt wird. Hierdurch lässt sich auf einfache Art und Weise die Kühlluftstrecke verlängern und infolgedessen die Kühlung verbessern.

Die Gehäusestruktur weist zwei sich zumindest teilweise in axialer Richtung und sich zumindest teilweise in Umfangsrichtung erstreckende und in radialer Richtung zwischen der Gehäusewand und der inneren Wand angeordnete Zwischenwände auf. Hierdurch lässt sich auf besonders einfache Art und Weise ein von der inneren Wand und damit dem heißen Hauptströmungskanal beabstandeter Kühlluftkanal ausbilden, wodurch eine Erwärmung der Kühlluft durch heiße Strömung im Hauptströmungskanal erheblich reduziert werden kann.

Durch die zusätzliche Zwischenwand kann ferner die Durchschlagsicherheit der Gehäusestruktur verbessert werden.

In einer Ausführung der vorliegenden Erfindung weist die Gehäusestruktur insbesondere eine erste, in radialer Richtung weiter außen angeordnete Zwischenwand und eine zweite, zumindest teilweise, insbesondere vollständig, in radialer Richtung innerhalb von der ersten Zwischenwand angeordnete zweite Zwischenwand auf. Insbesondere sind die erste Zwischenwand und die zweite Zwischenwand dabei konzentrisch zueinander angeordnet und können insbesondere konzentrisch zur Rotationsachse bzw. zur (Haupt-)Maschinenachse angeordnet werden. Hierdurch lässt sich auf einfache Art und Weise eine Umlenkung der Kühlluft um 180° realisieren und eine Verlängerung der Kühllänge. Ferner lässt sich auf diese Weise außerdem eine Erwärmung der am zu kühlenden Gehäuseabschnitt unmittelbar vorbeiströmenden Kühlluft durch die heiße Strömung im Hauptströmungskanal noch weiter reduzieren. Ebenso lässt sich durch eine zweite Zwischenwand eine weitere Verbesserung der Durchschlagsicherheit erreichen.

Der Kühlluftkanal ist im ersten Abschnitt in radialer Richtung durch eine Innenfläche des zu kühlenden Gehäuseabschnitts der Gehäusewand und durch eine Außenfläche der sich zumindest teilweise in axialer Richtung erstreckenden und in radialer Richtung zwischen der Gehäusewand und der inneren Wand angeordneten ersten Zwischenwand begrenzt. Hierdurch lässt sich auf besonders einfache Art und Weise eine vorteilhafte Kühlluftführung erreichen.

In einer Ausführung der vorliegenden Erfindung ist die erste Zwischenwand dabei insbesondere beabstandet von der Gehäusewand angeordnet, insbesondere mit einem definierten Abstand, gegebenenfalls mit einem oder mehreren Abstandshaltern dazwischen, wobei ein oder mehrere Abstandshalter durch eine wellenförmige oder noppenförmige Kontur in axialer Richtung der ersten Zwischenwand gebildet sein können. Alternativ können auch entsprechende, auf der der Gehäusewand zugewandten Seite auf der Zwischenwand angeordnete Vorsprünge, Rippen, insbesondere axial verlaufenden Rippen, oder dergleichen als Abstandshalter dienen. Hierdurch lässt sich auf besonders einfache Art und Weise eine vorteilhafte Kühlluftführung erreichen, insbesondere ein Kühlluftkanal mit definierten Abmessungen.

In einer Ausführung der vorliegenden Erfindung liegt die erste Zwischenwand mit ihrem stromabwärtigen Ende, insbesondere im Bereich des stromabwärtigen Endes der Gehäusewand, insbesondere stromabwärts vom Kühlluftkanaleinlass, an der Innenfläche der Gehäusewand an, insbesondere mit einer definierten Anpresskraft, zur axialen Begrenzung des Kühlluftkanals stromabwärts, insbesondere zur axialen Begrenzung des ersten Abschnitts des Kühlluftkanals stromabwärts. Die erste Zwischenwand kann dazu beispielsweise gegen die Gehäusewand gepresst sein und/oder an der Gehäusewand befestigt sein. Hierdurch lässt sich auf besonders einfache Art und Weise eine vorteilhafte Kühlluftführung erreichen, insbesondere eine für die Kühlluftführung vorteilhafte axiale Abdichtung.

In einer Ausführung der vorliegenden Erfindung ist die erste Zwischenwand insbesondere durch einen ersten, in Umfangsrichtung geschlossenen Ring oder durch wenigstens ein Ringsegment gebildet, wobei der Ring einstückig ausgebildet sein kann oder aus mehreren Ringsegmenten zusammengesetzt sein kann, sowohl in Umfangsrichtung und/oder in axialer Richtung. Hierdurch lässt sich konstruktiv besonders einfach eine vorteilhafte Kühlluftführung realisieren.

In einer Ausführung der vorliegenden Erfindung weist die erste Zwischenwand Metall auf oder besteht daraus, insbesondere einen höherfesten Werkstoff. Hierdurch kann die Durchschlagfestigkeit der Gehäusestruktur erhöht werden, in einigen Fällen sogar derart, dass eine geringere Dimensionierung der Gehäusewand möglich wird, infolge derer eine Gewichtsreduzierung möglich wird sowie Kosten eingespart werden können aufgrund eines geringeren Materialbedarfs für die Gehäusewand.

Der Kühlluftkanal ist im zweiten Abschnitt in radialer Richtung nach außen durch eine Innenfläche der ersten Zwischenwand begrenzt. Hierdurch lässt sich auf besonders einfache Art und Weise eine vorteilhafte Kühlluftführung erreichen.

Der Kühlluftkanal ist im zweiten Abschnitt in radialer Richtung nach innen durch eine Außenfläche der sich zumindest teilweise in axialer Richtung erstreckenden und in radialer Richtung zwischen der ersten Zwischenwand und der inneren Wand angeordneten zweiten Zwischenwand begrenzt. Hierdurch lässt sich auf besonders einfache Art und Weise eine vorteilhafte Kühlluftführung erreichen.

In einer Ausführung der vorliegenden Erfindung ist die zweite Zwischenwand dabei insbesondere beabstandet von der ersten Zwischenwand angeordnet, insbesondere mit einem definierten Abstand, gegebenenfalls mit einem oder mehreren Abstandshaltern dazwischen, wobei ein oder mehrere Abstandshalter durch eine wellenförmige Kontur in axialer Richtung der ersten Zwischenwand und/oder zweiten Zwischenwand gebildet sein können. Alternativ können auch entsprechende, auf der ersten Zwischenwand und/oder der zweiten Zwischenwand angeordnete Noppen, Vorsprünge, Rippen, insbesondere axial verlaufenden Rippen, oder dergleichen als Abstandshalter dienen. Hierdurch lässt sich auf besonders einfache Art und Weise eine vorteilhafte Kühlluftführung erreichen, insbesondere ein Kühlluftkanal mit definierten Abmessungen.

In einer Ausführung der vorliegenden Erfindung ist die zweite Zwischenwand dabei insbesondere beabstandet von der inneren Wand angeordnet. Hierdurch lässt sich auf besonders einfache Art und Weise die Erwärmung der Kühlluft durch die heiße Strömung im Hauptströmungskanal erheblich verringern.

In einer Ausführung der vorliegenden Erfindung liegt die zweite Zwischenwand mit ihrem stromaufwärtigen Ende, insbesondere im Bereich des stromaufwärtigen Endes der Gehäusewand, insbesondere stromaufwärts von einer Umlenkung im Kühlluftkanal, an der Innenfläche der Gehäusewand an, insbesondere mit einer definierten Anpresskraft, zur axialen Begrenzung des Kühlluftkanals stromaufwärts, insbesondere zur axialen Begrenzung des zweiten Abschnitts des Kühlluftkanals stromaufwärts. Die zweite Zwischenwand kann dazu beispielsweise gegen die Gehäusewand gepresst sein und/oder an der Gehäusewand befestigt sein und/oder gegen die Gehäusewand geklemmt sein. Hierdurch lässt sich auf besonders einfache Art und Weise eine vorteilhafte Kühlluftführung erreichen, insbesondere eine für die Kühlluftführung vorteilhafte axiale Abdichtung.

In einer Ausführung der vorliegenden Erfindung ist die zweite Zwischenwand insbesondere durch einen ersten, in Umfangsrichtung geschlossenen Ring oder durch wenigstens ein Ringsegment gebildet, wobei der Ring einstückig ausgebildet sein kann oder aus mehreren Ringsegmenten zusammengesetzt sein kann, sowohl in Umfangsrichtung und/oder in axialer Richtung. Hierdurch lässt sich eine konstruktiv besonders einfache und insbesondere vorteilhafte Kühlluftführung realisieren.

In einer Ausführung der vorliegenden Erfindung weist die zweite Zwischenwand Metall auf oder besteht daraus, insbesondere einen höherfesten Werkstoff. Hierdurch kann die Durchschlagfestigkeit der Gehäusestruktur weiter erhöht werden.

In einer Ausführung der vorliegenden Erfindung sind die erste Zwischenwand und die zweite Zwischenwand separat ausgebildet, d.h. als separate Bauteile, insbesondere in Form von zwei koaxial zueinander angeordneten Ringen, welche insbesondere axial ineinandergesteckt werden können. Hierdurch lässt sich eine konstruktiv besonders einfache und insbesondere vorteilhafte Kühlluftführung realisieren.

In einer Ausführung der vorliegenden Erfindung können die erste Zwischenwand und zweite Zwischenwand miteinander zu einer Baugruppe vormontiert sein und insbesondere lösbar miteinander verbunden sein. Hierdurch lässt sich eine besonders einfache Kühlluftführung realisieren, welche insbesondere einfach montierbar ist.

In einer Ausführung der vorliegenden Erfindung ist der Kühlluftkanalauslass insbesondere durch eine Öffnung, insbesondere durch einen Spalt, insbesondere durch einen zumindest teilweise umlaufenden Spalt, insbesondere durch einen vollständig umlaufenden Spalt, zwischen der ersten Zwischenwand und der zweiten Zwischenwand gebildet, wobei der Kühlluftauslasskanal insbesondere durch einen Spalt zwischen dem stromabwärtigen Ende von einer der beiden Zwischenwände und der anderen Zwischenwand gebildet ist, oder durch einen Spalt zwischen den beiden stromabwärtigen Enden beider Zwischenwände. Hierdurch lässt sich eine konstruktiv besonders einfache und insbesondere vorteilhafte und flexibel ausgestaltbare Kühlluftführung realisieren.

In einer Ausführung der vorliegenden Erfindung befindet sich der Kühlluftkanalauslass insbesondere im Bereich des stromabwärtigen Endes der Gehäusewand, insbesondere stromabwärts der Rotorstufe. Hierdurch lässt sich eine besonders vorteilhafte Kühlluftführung realisieren, insbesondere eine Kühlluftführung welche nur einen geringen Kühlluftdruck erfordert.

In einer Ausführung der vorliegenden Erfindung weist wenigstens eine Zwischenwand, insbesondere die erste Zwischenwand, insbesondere an ihrem am stromabwärtigen Ende, einen Kühlluftleitabschnitt auf, welcher dazu ausgebildet ist, am oder in einem Bereich vor dem Kühlluftkanalauslass eine Strömungsrichtung einer Kühlluftströmung zu beeinflussen, insbesondere zu ändern, wobei sich der Kühlluftleitabschnitt insbesondere in radialer Richtung erstreckt und insbesondere das stromabwärtige Ende der zugehörigen Zwischenwand bildet und insbesondere zusammen mit der anderen Zwischenwand, insbesondere zusammen mit deren stromabwärtigen Ende, den Kühlluftkanalauslass bildet. Hierdurch lässt sich eine konstruktiv besonders einfache und insbesondere vorteilhafte und flexibel ausgestaltbare Kühlluftführung realisieren, insbesondere mit einer gezielten Beeinflussung der Kühlluftströmung.

In einer Ausführung der vorliegenden Erfindung ist die Gehäusestruktur insbesondere derart ausgebildet, dass aus dem Kühlluftkanal ausgeströmte Kühlluft stromabwärts vom Kühlluftkanalauslass in den Hauptströmungskanal eintreten kann, insbesondere durch einen Spalt zwischen der inneren Wand und einem weiteren Bauteil. Hierdurch kann auf besonders einfache Art und Weise eine Kühlluftabfuhr realisiert werden.

Umgibt der zu kühlende Gehäuseabschnitt eine Rotorstufe, ist in einer Ausführung der vorliegenden Erfindung das weitere Bauteil insbesondere eine Leitschaufel einer stromabwärts von der Rotorstufe angeordneten Statorstufe.

In einer Ausführung der vorliegenden Erfindung kann die Kühlluft dabei insbesondere mit einer an die Strömungsrichtung einer im Hauptströmungskanal strömenden Strömung angepassten Kühlluftströmungsrichtung in den Hauptströmungskanal abgeführt werden. Hierdurch können unerwünschte, die Hauptströmung und damit insbesondere einen Wirkungsgrad der Strömungsmaschine negativ beeinflussende Effekte reduziert bzw. teilweise sogar ganz vermieden werden.

In einer Ausführung der vorliegenden Erfindung ist in radialer Richtung zwischen der Gehäusewand und der inneren Wand wenigstens ein sich zumindest teilweise in axialer Richtung und zumindest teilweise in Umfangsrichtung erstreckendes Dichtelement angeordnet, wobei das Dichtelement insbesondere in radialer Richtung zwischen einer innersten, den Kühlluftkanal begrenzenden Zwischenwand und der inneren Wand angeordnet ist.

In einer Ausführung der vorliegenden Erfindung ist das Dichtelement insbesondere dazu ausgebildet, eine Durchströmung des Volumens mit heißem, aufgrund von Leckagen aus dem Hauptströmungskanal ausgetretenen Fluid, zu reduzieren zur Verbesserung der Kühlung des Gehäuseabschnitts und/oder zur Steigerung der Effizienz der Kühlung.

In einer Ausführung der vorliegenden Erfindung ist das Dichtelement insbesondere in radialer Richtung zwischen dem zweiten Zwischenelement und der inneren Wand angeordnet.

In einer Ausführung der vorliegenden Erfindung begrenzt das Dichtelement insbesondere zusammen mit der innersten Zwischenwand einen Heißluftkanal in radialer Richtung, wobei die Innenfläche der innersten Zwischenwand den Heißluftkanal zumindest teilweise insbesondere in radialer Richtung nach außen begrenzt und die Außenfläche des Dichtelements den Heißluftkanal zumindest teilweise insbesondere in radialer Richtung nach innen.

In einer Weiterbildung der vorliegenden Erfindung begrenzt das Dichtelement dabei insbesondere zusammen mit der innersten Zwischenwand den Heißluftkanal in axialer Richtung derart, dass der Heißluftkanal in axialer Richtung bis auf einen kleinen Durchströmspalt verengt wird und/oder ist. Hierdurch lässt sich besonders einfach eine nennenswerte Reduzierung der Durchströmung des Volumens zwischen Gehäusewand und innerer Wand, insbesondere zwischen innerster Zwischenwand und innerer Wand, mit heißer Strömung erreichen.

In einer Ausführung der vorliegenden Erfindung weist das Dichtelement eine weitere Wand auf oder ist eine weitere Wand, wobei das Dichtelement insbesondere durch einen weiteren Ring gebildet, wobei das Dichtelement insbesondere Metall aufweist oder daraus besteht. Hierdurch lässt sich auf konstruktiv besonders einfache Art und Weise ein entsprechendes Dichtelement realisieren.

In einer Ausführung der vorliegenden Erfindung weist das Dichtelement insbesondere eine geringere axiale Erstreckung auf als die erste und/oder zweite Zwischenwand, wobei das Dichtelement in axialer Richtung insbesondere nur etwa eine Hälfte der Länge der ersten und/oder zweiten Zwischenwand aufweist. Hierdurch lässt sich besonders einfach eine nennenswerte Reduzierung der Durchströmung des Volumens zwischen Gehäusewand und innerer Wand, insbesondere zwischen innerster Zwischenwand und innerer Wand, mit heißer Strömung erreichen.

In einer alternativen Ausführung der vorliegenden Erfindung weist das Dichtelement einen volumigen Dichtkörper auf oder ist ein volumiger Dichtkörper, welcher ein Volumen zwischen der innersten Zwischenwand und der inneren Wand zumindest teilweise, insbesondere zu wenigstens 50%, vorzugsweise zu wenigstens 75%, besonders bevorzugt zu wenigstens 85% ausfüllt, wobei das Dichtelement in diesem Fall insbesondere in axialer Richtung bevorzugt in etwa die gleiche Erstreckung aufweist wie die innerste Zwischenwand. Hierdurch lässt sich besonders einfach eine erhebliche Reduzierung der Durchströmung des Volumens zwischen Gehäusewand und innerer Wand, insbesondere zwischen innerster Zwischenwand und innerer Wand, mit heißer Strömung erreichen.

In einer Weiterbildung der vorliegenden Erfindung weist das Dichtelement einen volumigen Dichtkörper auf, der thermisch isolierend ausgebildet ist. Hierdurch lässt sich auf besonders einfache Art und Weise zusätzlich zur Reduzierung der Durchströmung des Volumens zwischen Gehäusewand und innerer Wand, insbesondere zwischen innerster Zwischenwand und innerer Wand, mit heißer Strömung außerdem noch eine thermische Isolierung des Kühlluftkanals erreichen.

Eine erfindungsgemäße Strömungsmaschine weist eine erfindungsgemäße Gehäusestruktur auf. Hierdurch lässt sich auf besonders einfache Art und Weise eine effiziente Kühlung eines zu kühlenden Gehäuseabschnitts der Strömungsmaschine erreichen.

In einer Ausführung einer Strömungsmaschine gemäß der vorliegenden Erfindung weist die Strömungsmaschine eine Rotorstufe mit Laufschaufeln und eine stromabwärts von der Rotorstufe angeordnete Statorstufe mit Leitschaufeln auf, wobei der zu kühlende Gehäuseabschnitt der Gehäusestruktur zumindest die Rotorstufe zumindest teilweise umgibt, wobei die Strömungsmaschine, insbesondere die Gehäusestruktur, derart ausgebildet ist, dass wenigstens einem Kühlluftkanal Kühlluft von der stromabwärts zur Rotorstufe angeordneten Statorstufe zuführbar ist, insbesondere von radial außerhalb der Leitschaufeln der stromabwärtigen Statorstufe, insbesondere zumindest teilweise entgegen einer Hauptströmungsrichtung einer Hauptströmung im Hauptströmungskanal. Hierdurch lässt sich auf besonders einfache Art und Weise eine effiziente Kühlung eines zu kühlenden Gehäuseabschnitts einer Rotorstufe der Strömungsmaschine erreichen.

In einer Ausführung einer Strömungsmaschine gemäß der vorliegenden Erfindung ist wenigstens einem Kühlluftkanal Kühlluft insbesondere über wenigstens einen in einen am stromabwärtigen Ende des Gehäuseteils angeordneten Gehäusehaken des Gehäuseteils der Gehäusestruktur eingebrachten Kühlluftkanaleinlass zuführbar, wobei der Gehäusehaken zur Aufnahme wenigstens eines Leitschaufelhakens wenigstens einer Leitschaufel der stromabwärtigen Statorstufe ausgebildet ist.

Hierdurch lässt sich auf besonders einfache Art und Weise eine effiziente Kühlung eines zu kühlenden Gehäuseabschnitts erreichen.

In einer Ausführung einer Strömungsmaschine gemäß der vorliegenden Erfindung bildet die innere Wand der Gehäusestruktur an ihrem stromabwärtigen Ende mit wenigstens einer Leitschaufel der an die Rotorstufe angrenzenden Statorstufe einen Austrittsspalt, über welchen die aus dem Kühlluftkanal ausgetretene Kühlluft in den Hauptströmungskanal abführbar ist, insbesondere zusammen mit einer aufgrund von Leckagen aus dem Hauptströmungskanal ausgetretenen heißen Leckageströmung. Hierdurch kann auf besonders einfache Art und Weise eine Kühlluftabfuhr realisiert werden.

Ein erfindungsgemäßes Verfahren zum Kühlen eines Gehäuseabschnitts einer Gehäusestruktur einer erfindungsgemäßen Strömungsmaschine ist dadurch gekennzeichnet, dass dem Kühlluftkanal der Gehäusestruktur, deren zu kühlender Gehäuseabschnitt die stromaufwärts von der Statorstufe angeordneten Rotorstufe zumindest teilweise umgibt, über den Kühlluftkanaleinlass Kühlluft aus einem Bereich radial außerhalb der Leitschaufeln der Statorstufe zugeführt wird, wobei die Strömungsmaschine dazu insbesondere derart betrieben wird, dass ein Druck in diesem Bereich größer ist als ein Austrittsdruck einer Strömung im Bereich des Kühlluftkanalauslasses . Hierdurch lässt sich auf besonders einfache Art und Weise eine effiziente Kühlung des zu kühlenden Gehäuseabschnitts erreichen.

Sämtliche der im Zusammenhang mit einem erfindungsgemäßen Gegenstand beschriebenen Merkmale, Eigenschaften und Vorteile gelten dabei, sofern technisch umsetzbar bzw. zutreffend, auch für die anderen eine erfindungsgemäßen Gegenstände, auch wenn diese im Zusammenhang mit diesen Gegenständen nicht explizit erwähnt sind. D.h. die im Zusammenhang mit einer erfindungsgemäßen Gehäusestruktur beschriebenen Merkmale, Eigenschaften und Vorteile gelten auch für eine erfindungsgemäße Strömungsmaschine und ein erfindungsgemäßes Verfahren und umgekehrt, sofern dies technisch umsetzbar bzw. zutreffend ist.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Ausschnitt eines ersten Ausführungsbeispiels einer erfindungsgemäßen Strömungsmaschine mit einem ersten Ausführungsbeispiel einer erfindungsgemäßen Gehäusestruktur, und
- Fig. 2: einen Ausschnitt eines zweiten Ausführungsbeispiels einer erfindungsgemäßen Strömungsmaschine mit einem zweiten Ausführungsbeispiel einer erfindungsgemäßen Gehäusestruktur.

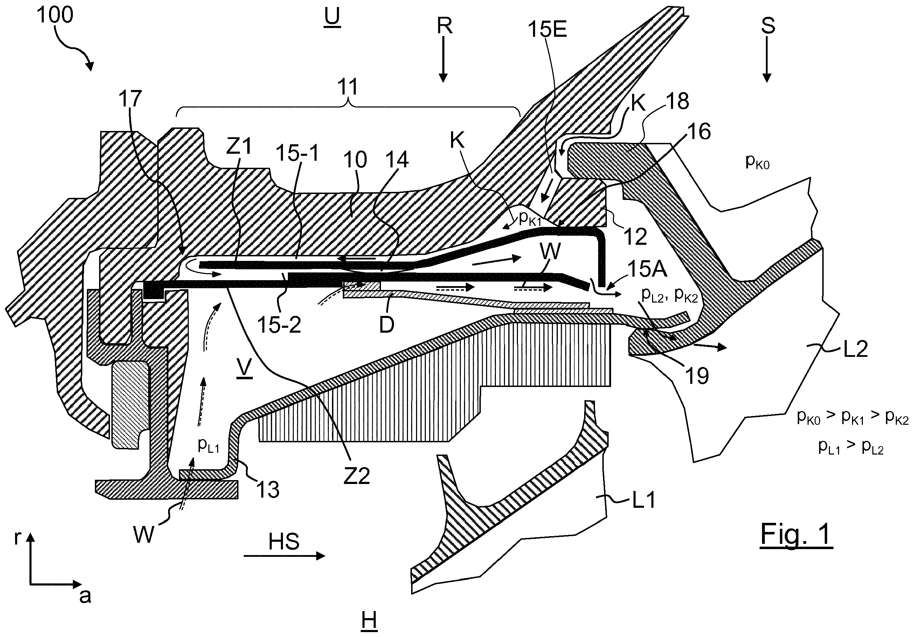

Fig. 1 zeigt einen Ausschnitt eines ersten Ausführungsbeispiels einer erfindungsgemäßen, als Niederdruckturbine ausgebildeten Strömungsmaschine mit einer Rotorstufe R und einer stromabwärts von dieser angeordneten Statorstufe S, wobei die Rotorstufe R eine Vielzahl von in Umfangsrichtung gleichmäßig verteilt angeordneten und sich in radialer Richtung r erstreckenden Laufschaufeln L1 aufweist und die Statorstufe S eine Vielzahl von in Umfangsrichtung gleichmäßig verteilt angeordneten sich in radialer Richtung r erstreckenden Leitschaufeln L2.

Die Strömungsmaschine weist dabei erfindungsgemäß eine erfindungsgemäße Gehäusestruktur 100 auf, welche einen Hauptströmungskanal H der Strömungsmaschine, in dem die Laufschaufeln L1 und Leitschaufeln L2 angeordnet sind, zur Abgrenzung gegenüber einer Umgebung U zumindest teilweise ringförmig umgibt, insbesondere die Laufschaufeln L1 der Rotorstufe R.

Die Gehäusestruktur 100 weist dabei eine äußere, durch wenigstens einen Gehäuseteil gebildete Gehäusewand 10 und eine durch mehrere zu einem Mantelring zusammengesetzte Mantelringsegmente gebildete, innere Wand 13 aus einem hochtemperaturfesten Material auf. Die innere Wand 13 ist dabei in radialer Richtung r innerhalb der Gehäusewand 10 und in radialer Richtung r beabstandet zur Gehäusewand 10 angeordnet und dazu ausgebildet, den Hauptströmungskanal H mit den darin angeordneten Laufschaufeln L1 und den Leitschaufeln L2 zumindest teilweise zu begrenzen.

In einem Volumen V zwischen der Gehäusewand 10 und der inneren Wand 13 Verläuft ein Kühlluftkanal 15 zur Führung von Kühlluft K zur Kühlung eines zu kühlenden Gehäuseabschnitts 11 der Gehäusewand 10, wobei der zu kühlende Gehäuseabschnitt 11, bezogen auf eine Hauptströmungsrichtung HS, mit welcher eine Hauptströmung beim Betrieb der Strömungsmaschine den Hauptströmungskanal H durchströmt, ein stromaufwärtiges Ende 17 und ein stromabwärtiges Ende 16 aufweist.

Der Kühlluftkanal 15 weist dabei einen Kühlluftkanaleinlass 15E zur Zufuhr von Kühlluft K in den Kühlluftkanal 15 auf und einen Kühlluftkanalauslass 15A zum Austritt von Kühlluft K aus dem Kühlluftkanal 15.

Erfindungsgemäß ist der Kühlluftkanaleinlass 15E im Bereich des stromabwärtigen Endes 16 des zu kühlenden Gehäuseabschnitts 11 angeordnet. Der Kühlluftkanalauslass 15A ist in diesem Fall ebenfalls im Bereich des stromabwärtigen Endes 16 des zu kühlenden Gehäuseabschnitts 11 angeordnet.

Bei der in Fig. 1 dargestellten Gehäusestruktur 100 weist der Kühlluftkanal 15 einen ersten Abschnitt 15-1 sowie einen zweiten Abschnitt 15-2 auf, wobei der erste Abschnitt 15-1 insbesondere an den Kühlluftkanaleinlass 15E angrenzt und der zweite Abschnitt 15-2 insbesondere an den Kühlluftkanalauslass 15A, und wobei im ersten Abschnitt 15-1 dem Kühlluftkanal 15 über den Kühlluftkanaleinlass 15E zugeführte Kühlluft K in Richtung des stromaufwärtigen Endes 17 des zu kühlenden Gehäuseabschnitts 11 strömt, während im zweiten Abschnitt 15-2 die Kühlluft K nachdem sie im Bereich des stromaufwärtigen Endes 17 um 180° umgelenkt worden ist, in Richtung des stromabwärtigen Endes 16 strömt. Hierdurch kann eine besonders vorteilhafte Kühlluftführung erreicht werden. Durch die Umlenkung kann eine besonders lange Kühlstrecke realisiert werden.

Der Kühlluftkanal 15 wird unter anderem mittels zweier, sich zumindest teilweise in axialer Richtung a und sich zumindest teilweise in Umfangsrichtung erstreckender und in radialer Richtung r zwischen der Gehäusewand 10 und der inneren Wand 13 angeordnete Zwischenwände Z1 und Z2 gebildet, wobei der Kühlluftkanal 15 im ersten Abschnitt 15-1 in radialer Richtung r durch eine Innenfläche des zu kühlenden Gehäuseabschnitts 11 der Gehäusewand 10 und durch eine Außenfläche der ersten Zwischenwand Z1 begrenzt ist. Hierdurch kann im Bereich des ersten Kühlluftkanalabschnittes 15-1 frische, kalte Kühlluft K unmittelbar an dem zu kühlenden Gehäuseabschnitt 11 entlangströmen, wodurch eine besonders gute Kühlwirkung erreicht wird.

Die erste Zwischenwand Z1 liegt dabei mit ihrem stromabwärtigen Ende im Bereich des stromabwärtigen Endes 16 der Gehäusewand 10, insbesondere stromabwärts vom Kühlluftkanaleinlass 15E, an der Innenfläche der Gehäusewand 10 an, insbesondere mit einer definierten Anpresskraft, zur axialen Begrenzung des ersten Abschnitts 15-1 des Kühlluftkanals 15 stromabwärts.

Im zweiten Abschnitt 15-2 ist der Kühlluftkanal 15 in radialer Richtung r nach außen durch eine Innenfläche der ersten Zwischenwand Z1 begrenzt und in radialer Richtung r nach innen durch eine Außenfläche der zweiten Zwischenwand Z2.

Die zweite Zwischenwand Z2 liegt dabei mit ihrem stromaufwärtigen Ende im Bereich des stromaufwärtigen Endes 17 der Gehäusewand 10, insbesondere stromaufwärts von einer Umlenkung im Kühlluftkanal 15, an der Innenfläche der Gehäusewand 10 an, ebenfalls mit einer definierten Anpresskraft, zur axialen Begrenzung des zweiten Abschnitts 15-2 des Kühlluftkanals 15 stromaufwärts, wobei die zweite Zwischenwand Z2 dabei von einem mit dem Gehäuseteil verbundenen, hier nicht näher bezeichneten Bauteil, gegen den Gehäuseteil gepresst wird.

Die Zwischenwände Z1 und Z2 sind jeweils durch Ringe aus einem hochfesten Metallwerkstoff gebildet, welche ineinander gesteckt sind und welchen neben ihrer Funktion als Kühlkanalwände außerdem zur Erhöhung der Durchschlagfestigkeit der Gehäusestruktur 100 dienen.

Für definierte Abmessungen des Kühlluftkanals 15 können zwischen der ersten und zweiten Zwischenwand Z1, Z2 Abstandshalter 14 vorgesehen sein.

Bei dieser Gehäusestruktur 100 ist der Kühlluftkanalauslass 15A durch eine Öffnung, insbesondere durch einen Spalt, insbesondere durch einen zumindest teilweise umlaufenden Spalt, insbesondere durch einen vollständig umlaufenden Spalt, zwischen der ersten Zwischenwand Z1 und der zweiten Zwischenwand Z2 gebildet, insbesondere jeweils durch deren stromabwärtige Enden. Für eine besonders vorteilhafte Kühlluftführung weisen die beiden Zwischenwände Z1 und Z2 dabei jeweils im Bereich ihrer stromabwärtigen Enden entsprechende, hier nicht näher bezeichnete Kühlluftleitabschnitte auf, mit welchen eine Beeinflussung der Strömungsrichtung der Kühlluft bewirkt werden kann, so dass die Kühlluft K mit einer definierten, insbesondere vorteilhaften Richtung aus dem Kühlluftkanal 15 ausströmen kann und über einen Spalt 19 zwischen der inneren Wand 13 und einem weiteren Bauteil, zum Beispiel einer Leitschaufel L2 der nachfolgenden Statorstufe S, in den Hauptströmungskanal H eintreten kann, insbesondere mit einer an die Strömungsrichtung der Hauptströmung angepassten Strömungsrichtung und insbesondere zusammen mit einer Leckageströmung.

Diese Gehäusestruktur 100 weist ferner radial zwischen der Gehäusewand 10 und der inneren Wand 13 wenigstens ein sich zumindest teilweise in axialer Richtung a und zumindest teilweise in Umfangsrichtung erstreckendes Dichtelement D auf, das ebenfalls als umlaufender Metallring ausgebildet ist, wobei das Dichtelement D insbesondere in radialer Richtung r zwischen der innersten, den Kühlluftkanal 15 begrenzenden Zwischenwand Z2 und der inneren Wand 13 angeordnet ist. Das Dichtelement D erstreckt sich dabei nur in etwa über die Hälfte der Länge des zu kühlenden Gehäuseabschnitts 11 bzw. der Zwischenwände Z1 und Z2 und liegt mit seinem stromabwärtigen Ende abdichtend an der inneren Wand 13 an. Das stromaufwärtige Ende des Dichtelements D definiert zusammen mit der Innenfläche des zweiten Zwischenelements Z2 einen kleinen Spalt, um eine Durchströmung des Volumens V mit einer durch Leckageeffekte aus dem Hauptströmungskanal in das Volumen V gelangten heißen Strömung W, insbesondere in unmittelbarer Nähe zum Kühlkanal 15, so gering wie möglich zu halten.

Zum Kühlen des Gehäuseabschnitts 11 wird dem Kühlluftkanal 15 der Gehäusestruktur 100, deren zu kühlender Gehäuseabschnitt 11 die stromaufwärts von der Statorstufe S angeordneten Rotorstufe R zumindest teilweise umgibt, über den Kühlluftkanaleinlass 15E, der insbesondere durch eine Durchgangsbohrung in einem Gehäusehaken 18 des Gehäuseteils gebildet ist, Kühlluft K aus einem Bereich radial außerhalb der Leitschaufeln L2 der Statorstufe S zugeführt, wobei die Strömungsmaschine dazu insbesondere derart betrieben wird, dass ein Kühlluftdruck p_{K0} in diesem Bereich größer ist als ein Austrittsdruck p_{K2} bzw. p_{L2} einer Strömung im Bereich des Kühlluftkanalauslasses 15A, insbesondere größer als ein Austrittdruck p_{L2} der austretenden, heißen Leckageströmung W sowie als ein Austrittsdruck p_{K2} einer aus dem Kühlluftkanal 15-1 und 15-2 am Kühlluftkanalauslass 15A austretenden Kühlluftströmung K bzw. größer als ein Druck einer aus diesen beiden Strömungen gemischten Strömung.

Der am Kühlluftkanaleinlass 15E erforderliche Kühlluftdruck p_{K0} kann dazu insbesondere mithilfe eines nicht dargestellten Verdichters erzeugt werden, wobei die hierfür erforderliche Kühlluft K dabei insbesondere dem Verdichter entnommen wird und mithilfe von Leitungen in das Volumen radial außerhalb der Leitschaufeln L2 der Statorstufe S geleitet wird, wo sie dann mit dem entsprechenden Kühlluftdruck p_{K0} beaufschlagt ist.

Entlang des Kühlluftkanals 15-1 und 15-2 vom Kühlluftkanaleinlass 15E bis zum Kühlluftkanalauslass 15A fällt der Kühlluftdruck von p_{K0} über p_{K1} bis auf p_{K2} ab.

Ebenso fällt in Strömungsrichtung ein Druck der heißen Leckageströmung von p_{L1} auf p_{L2} ab.

Durch den Druckabfall der heißen Leckageströmung W und den Druckabfall des Kühllufstromes in Richtung des Kühlluftkanalauslasses 15A, ist nur ein geringer Druck pₖ₀ erforderlich, um Kühlluft K in den Kühlluftkanal 15-1 mit dem erfindungsgemäß stromabwärts angeordneten Kühlluftkanaleinlass 15E einzubringen.

Durch die zweite Zwischenwand Z2 und das Dichtelement D kann, insbesondere ab dem Bereich der Umlenkung der Kühlluft, eine Mischung mit der heißen Leckageströmung W verhindert werden. Infolgedessen kann eine Druckerhöhung der Kühlluftströmung in Richtung Kühlluftkanalausgang 15A infolge einer Mischung mit der heißen Leckageströmung W, die zunächst einen Leckagedruck p_{L1} aufweist, verhindert werden.

Durch das Dichtelement D und den mittels diesem und dem zweiten Zwischenelement Z2 erzeugten kleinen Spalt kann darüber hinaus ein Druckabfall der heißen Leckageströmung W erhöht werden, wodurch sich ein geringerer erforderlicher Kühlluftdruck p_{K0} am Kühlluftkanaleinlass erreichen lässt.

Somit lässt sich mit einer erfindungsgemäßen Gehäusestruktur 100 auf besonders einfache Art und Weise eine effiziente Kühlung erreichen.

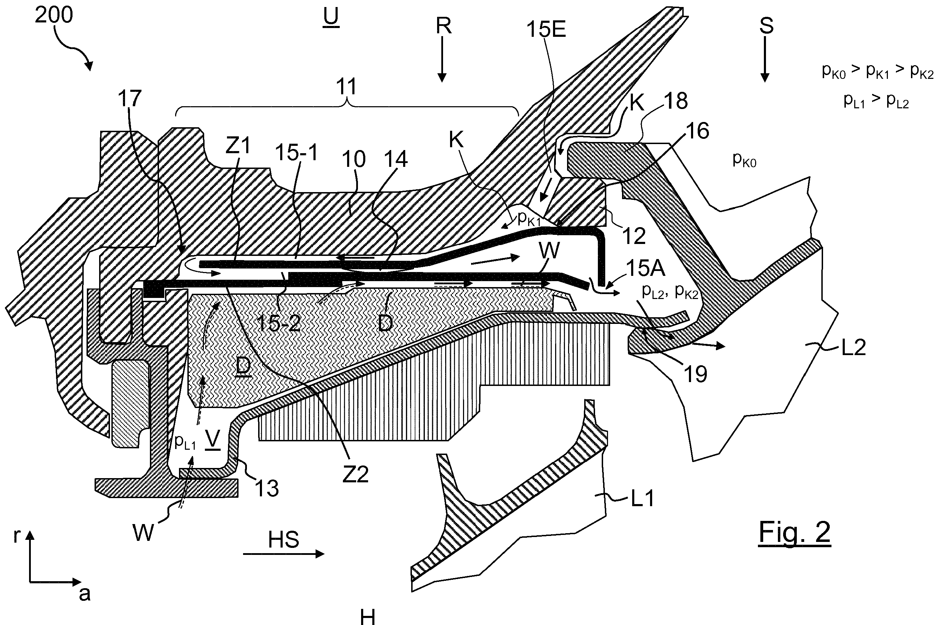

Fig. 2 zeigt einen Ausschnitt eines zweiten Ausführungsbeispiels einer erfindungsgemäßen Strömungsmaschine mit einem zweiten Ausführungsbeispiel einer erfindungsgemäßen Gehäusestruktur 200, welche sich lediglich im Dichtelement D' von der zuvor beschriebenen Gehäusestruktur unterscheidet.

In diesem Fall ist das Dichtelement D' ein volumiger Dichtkörper, welcher das Volumen zwischen der innersten Zwischenwand Z2 und der inneren Wand 13 zu wenigstens 85% ausfüllt, wobei das Dichtelement D' in diesem Fall in axialer Richtung a nahezu die gleiche Erstreckung aufweist wie die innerste Zwischenwand Z2. Hierdurch lässt sich besonders einfach eine erhebliche Reduzierung der Durchströmung des Volumens V mit heißer Strömung erreichen.

Zusätzlich ist der volumige Dichtkörper D' thermisch isolierend ausgebildet ist. Hierdurch lässt sich auf besonders einfache Art und Weise zusätzlich zur Reduzierung der Durchströmung des Volumens V mit heißer Strömung außerdem noch eine thermische Isolierung des Kühlluftkanals 15 vom Hauptströmungskanal H erreichen.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 100, 200: erfindungsgemäße Gehäusestruktur einer erfindungsgemäßen Strömungsmaschine
- 10: Gehäusewand
- 11: zu kühlender Gehäuseabschnitt
- 12: Gehäusehaken
- 13: innere Wand
- 14: Abstandshalter
- 15: Kühlluftkanal
- 15-1: erster Abschnitt des Kühlluftkanals
- 15-2: zweiter Abschnitt des Kühlluftkanals
- 15A: Kühlluftkanaleinlass
- 15E: Kühlluftkanalauslass
- 16: stromabwärtiges Ende des zu kühlenden Gehäuseabschnitts
- 17: stromaufwärtiges Ende des zu kühlenden Gehäuseabschnitts
- 18: Leitschaufelhaken
- 19: Austrittsspalt in den Hauptströmungskanal

- a: axiale Richtung
- r: radiale Richtung
- pK0: Kühlluftkanaldruck vor dem Kühlluftkanaleinlass
- pK1: Kühlluftkanaldruck nach dem Kühlluftkanaleinlass
- pK2: Kühlluftkanaldruck am Kühlluftkanalauslass
- pL1: Leckagedruck bei Eintritt in das Volumen V
- pL2: Leckagedruck am Kühlluftkanalauslass
- D, D': Dichtelement
- H: Hauptströmungskanal
- HS: Hauptströmungsrichtung
- K: Kühlluft
- L1: Laufschaufeln
- L2: Leitschaufeln
- R: Rotorstufe
- S: Statorstufe
- U: Umgebung
- V: Volumen
- W: heiße Strömung
- Z1: erste Zwischenwand
- Z2: zweite Zwischenwand

## Patentansprüche

1. Gehäusestruktur (100, 200) für eine Strömungsmaschine, insbesondere für eine Turbomaschine, wobei die Gehäusestruktur (100, 200) dazu ausgebildet ist, einen Hauptströmungskanal (H) der Strömungsmaschine, in dem Lauf- (L1) und Leitschaufeln (L2) angeordnet sind, zumindest teilweise ringförmig zu umgeben und die Strömungsmaschine gegenüber der Umgebung (U) abzugrenzen, wobei die Gehäusestruktur (100, 200) eine äußere, durch wenigstens einen Gehäuseteil gebildete Gehäusewand (10) und eine innere Wand (13) aufweist und wenigstens einen zumindest teilweise in einem Volumen (V) zwischen der Gehäusewand (10) und der inneren Wand (13) verlaufenen Kühlluftkanal (K) zur Kühlung eines zu kühlenden Gehäuseabschnitts (11) der Gehäusewand (10) umfasst,
- wobei die Gehäusewand (10) zur Abgrenzung der Strömungsmaschine gegenüber der Umgebung (U) ausgebildet ist,
- wobei die innere Wand (13) in radialer Richtung (r) innerhalb der Gehäusewand (10) und in radialer Richtung (r) beabstandet zur Gehäusewand (10) angeordnet ist und dazu ausgebildet ist, den Hauptströmungskanal (H) mit den darin angeordneten Lauf- (L1) und Leitschaufeln (L2) zumindest teilweise zu begrenzen,
- wobei der zu kühlende Gehäuseabschnitt (11), bezogen auf eine Hauptströmungsrichtung (HS), mit welcher eine Hauptströmung den Hauptströmungskanal (H) durchströmt, ein stromaufwärtiges Ende (17) und ein stromabwärtiges Ende (16) aufweist,
- wobei der Kühlluftkanal (15) einen Kühlluftkanaleinlass (15E) zur Zufuhr von Kühlluft (K) in den Kühlluftkanal (15) und einen Kühlluftkanalauslass (15A) zum Austritt von Kühlluft (K) aus dem Kühlluftkanal (15) aufweist, und
- wobei der Kühlluftkanal (15) einen ersten Abschnitt (15-1) und einen zweiten Abschnitt (15-2) aufweist, wobei die Gehäusestruktur (100, 200), derart ausgebildet ist, dass dem Kühlluftkanal (15) über den Kühlluftkanaleinlass (15E) zugeführte Kühlluft (K) im ersten Abschnitt (15-1) in Richtung des stromaufwärtigen Endes (17) des zu kühlenden Gehäuseabschnitts (11) strömt und im zweiten Abschnitt (15-2) in Richtung des stromabwärtigen Endes (16) des zu kühlenden Gehäuseabschnitts (11), wobei eine Kühlluftströmung im Übergang vom ersten Abschnitt (15-1) zum zweiten Abschnitt (15-2) umgelenkt wird,
wobei der Kühlluftkanaleinlass (15E) im Bereich des stromabwärtigen Endes (16) des zu kühlenden Gehäuseabschnitts (11) oder stromabwärts von diesem angeordnet ist, **dadurch gekennzeichnet, dass** die Gehäusestruktur (100, 200) wenigstens zwei sich zumindest teilweise in axialer Richtung (a) und sich zumindest teilweise in Umfangsrichtung erstreckende und in radialer Richtung (r) zwischen der Gehäusewand (10) und der inneren Wand (13) angeordnete Zwischenwände (Z1, Z2), nämlich eine erste und eine zweite Zwischenwand, aufweist, wobei der Kühlluftkanal (15) im ersten Abschnitt (15-1) in radialer Richtung durch eine Innenfläche des zu kühlenden Gehäuseabschnitts (11) der Gehäusewand (10) und durch eine Außenfläche der in radialer Richtung (r) zwischen der Gehäusewand (10) und der inneren Wand (13) angeordneten ersten Zwischenwand (Z1) begrenzt ist, wobei der Kühlluftkanal (15) im zweiten Abschnitt (15-2) in radialer Richtung (r) nach außen durch eine Innenfläche der ersten Zwischenwand (Z1) begrenzt ist und in radialer Richtung (r) nach innen durch eine Außenfläche der in radialer Richtung (r) zwischen der ersten Zwischenwand (Z1) und der inneren Wand (13) angeordneten zweiten Zwischenwand (Z2) begrenzt ist.

2. Gehäusestruktur (100, 200) nach Anspruch 1, **dadurch gekennzeichnet, dass** der Kühlluftkanalauslass (15A) ebenfalls im Bereich des stromabwärtigen Endes (16) des zu kühlenden Gehäuseabschnitts (11), am stromabwärtigen Ende (16) des zu kühlenden Gehäuseabschnitts (11) oder stromabwärts vom stromabwärtigen Ende (16) des zu kühlenden Gehäuseabschnitts (11) angeordnet ist.

3. Gehäusestruktur (100, 200) nach Anspruch 1 oder 2, **dadurch gekennzeichnet, dass** die Kühlluftströmung im Übergang vom ersten Abschnitt (15-1) zum zweiten Abschnitt (15-2) um 180° umgelenkt wird.

4. Gehäusestruktur (100, 200) nach einem der vorgenannten Ansprüche, **dadurch gekennzeichnet, dass** die erste Zwischenwand (Z1) mit ihrem stromabwärtigen Ende, insbesondere im Bereich des stromabwärtigen Endes (16) der Gehäusewand (10), insbesondere stromabwärts vom Kühlluftkanaleinlass (15E), an der Innenfläche der Gehäusewand (10) anliegt, insbesondere mit einer definierten Anpresskraft, zur axialen Begrenzung des Kühlluftkanals (15) stromabwärts, insbesondere zur axialen Begrenzung des ersten Abschnitts (15-1) des Kühlluftkanals (15) stromabwärts.

5. Gehäusestruktur (100, 200) nach einem der vorgenannten Ansprüche, **dadurch gekennzeichnet, dass** die zweite Zwischenwand (Z2) mit ihrem stromaufwärtigen Ende, insbesondere im Bereich des stromaufwärtigen Endes (17) der Gehäusewand (10), insbesondere stromaufwärts von einer Umlenkung im Kühlluftkanal (15), an der Innenfläche der Gehäusewand (10) anliegt, insbesondere mit einer definierten Anpresskraft, zur axialen Begrenzung des Kühlluftkanals (15) stromaufwärts, insbesondere zur axialen Begrenzung des zweiten Abschnitts (15-2) des Kühlluftkanals (15) stromaufwärts.

6. Gehäusestruktur (100, 200) nach einem der vorgenannten Ansprüche, **dadurch gekennzeichnet, dass** der Kühlluftkanalauslass (15A) durch eine Öffnung, insbesondere durch einen Spalt, insbesondere durch einen zumindest teilweise umlaufenden Spalt, insbesondere durch einen vollständig umlaufenden Spalt, zwischen der ersten Zwischenwand (Z1) und der zweiten Zwischenwand (Z2) gebildet ist.

7. Gehäusestruktur (100, 200) nach einem der vorgenannten Ansprüche, **dadurch gekennzeichnet, dass** radial zwischen der Gehäusewand (10) und der inneren Wand (13) wenigstens ein sich zumindest teilweise in axialer Richtung (a) und zumindest teilweise in Umfangsrichtung erstreckendes Dichtelement (D, D') angeordnet ist, wobei das Dichtelement (D, D') insbesondere in radialer Richtung (r) zwischen einer innersten, den Kühlluftkanal (15) begrenzenden Zwischenwand (Z2) und der inneren Wand (13) angeordnet ist.

8. Strömungsmaschine, insbesondere Turbomaschine, insbesondere Gasturbine, insbesondere Niederdruckturbine, wobei die Strömungsmaschine eine Gehäusestruktur (100, 200) aufweist, **dadurch gekennzeichnet, dass** die Gehäusestruktur (100, 200) nach einem der Ansprüche 1 bis 7 ausgebildet ist.

9. Strömungsmaschine nach Anspruch 8, **dadurch gekennzeichnet, dass** die Strömungsmaschine eine Rotorstufe (R) mit Laufschaufeln (L1) und eine stromabwärts von der Rotorstufe (R) angeordnete Statorstufe (S) mit Leitschaufeln (L2) aufweist, wobei der zu kühlende Gehäuseabschnitt der Gehäusestruktur (100, 200) zumindest die Rotorstufe (R) zumindest teilweise, insbesondere radial, umgibt, wobei die Strömungsmaschine, insbesondere die Gehäusestruktur (100, 200), derart ausgebildet ist, dass dem Kühlluftkanal (15) Kühlluft (K) von der stromabwärts zur Rotorstufe (R) angeordneten Statorstufe (S) zuführbar ist, insbesondere von radial außerhalb der Leitschaufeln (L2) der stromabwärtigen Statorstufe (S), insbesondere zumindest teilweise entgegen einer Hauptströmungsrichtung (HS) einer Hauptströmung im Hauptströmungskanal (H).

10. Strömungsmaschine nach Anspruch 8 oder 9, **dadurch gekennzeichnet, dass** die innere Wand (13) der Gehäusestruktur (100, 200) an ihrem stromabwärtigen Ende mit wenigstens einer Leitschaufel (L2) der an die Rotorstufe (R) angrenzenden Statorstufe (S) einen Austrittsspalt (19) bildet, über welchen die aus dem Kühlluftkanal (15) ausgetretene Kühlluft (K) in den Hauptströmungskanal (H) abführbar ist, insbesondere zusammen mit einer aufgrund von Leckagen aus dem Hauptströmungskanal (H) ausgetretenen heißen Leckageströmung (W).

11. Verfahren zum Kühlen eines Gehäuseabschnitts (11) einer Gehäusestruktur (100, 200) einer Strömungsmaschine, die nach Anspruch 9 oder 10 ausgebildet ist, **dadurch gekennzeichnet, dass** dem Kühlluftkanal (15) der Gehäusestruktur (100, 200), deren zu kühlender Gehäuseabschnitt (11) die stromaufwärts von der Statorstufe (S) angeordneten Rotorstufe (R) zumindest teilweise umgibt, über den Kühlluftkanaleinlass (15E) Kühlluft (K) aus einem Bereich radial außerhalb der Leitschaufeln der Statorstufe (S) zugeführt wird, wobei die Strömungsmaschine dazu insbesondere derart betrieben wird, dass ein Kühlluftdruck (p_{K0}) in diesem Bereich größer ist als ein Austrittsdruck (p_{K2}, p_{L2}) einer Strömung im Bereich des Kühlluftkanalauslasses (15A).

## Claims

1. Housing structure (100, 200) for a fluid-flow machine, in particular for a turbomachine, the housing structure (100, 200) being designed to annularly surround, at least in part, a main flow channel (H) of the fluid-flow machine, in which rotor blades (L1) and stator blades (L2) are arranged, and to delimit the fluid-flow machine from the surroundings (U), the housing structure (100, 200) having an outer housing wall (10) formed by at least one housing part and an inner wall (13) and comprising at least one cooling air channel (K), extending at least in part in a volume (V) between the housing wall (10) and the inner wall (13), for cooling a housing portion (11) of the housing wall (10) to be cooled,
- the housing wall (10) being designed to delimit the fluid-flow machine from the surroundings (U),
- the inner wall (13) being arranged in the radial direction (r) inside the housing wall (10) and in the radial direction (r) at a distance from the housing wall (10) and being designed to delimit, at least in part, the main flow channel (H) having the rotor blades (L1) and stator blades (L2) arranged therein,
- the housing portion (11) to be cooled having an upstream end (17) and a downstream end (16) in relation to a main flow direction (HS) in which a main flow flows through the main flow channel (H),
- the cooling air channel (15) having a cooling air channel inlet (15E) for supplying cooling air (K) into the cooling air channel (15) and a cooling air channel outlet (15A) for discharging cooling air (K) from the cooling air channel (15), and
- the cooling air channel (15) having a first portion (15-1) and a second portion (15-2), the housing structure (100, 200) being designed such that cooli ng air (K) supplied to the cooling air channel (15) via the cooling air channel inlet (15E) flows, in the first portion (15-1), in the direction of the upstream end (17) of the housing portion (11) to be cooled and, in the second portion (15-2), in the direction of the downstream end (16) of the housing portion (11) to be cooled, a cooling air flow being deflected in the transition from the first portion (15-1) to the second portion (15-2),
the cooling air channel inlet (15E) being arranged in the region of the downstream end (16) of the housing portion (11) to be cooled or downstream thereof, **characterized in that** the housing structure (100, 200) comprises at least two partition walls (Z1, Z2), specifically a first partition wall and a second partition wall, extending at least in part in the axial direction (a) and at least in part in the circumferential direction and arranged in the radial direction (r) between the housing wall (10) and the inner wall (13), the cooling air channel (15) being delimited in the first portion (15-1) in the radial direction by an inner surface of the housing portion (11) of the housing wall (10) to be cooled and by an outer surface of the first partition wall (Z1) arranged in the radial direction (r) between the housing wall (10) and the inner wall (13), the cooling air channel (15) being delimited in the second portion (15-2) outward in the radial direction by an inner surface of the first partition wall (Z1) and inward in the radial direction (r) by an outer surface of the second partition wall (Z2) arranged in the radial direction (r) between the first partition wall (Z1) and the inner wall (13).

2. Housing structure (100, 200) according to claim 1, **characterized in that** the cooling air channel outlet (15A) is also arranged in the region of the downstream end (16) of the housing portion (11) to be cooled, at the downstream end (16) of the housing portion (11) to be cooled or downstream of the downstream end (16) of the housing portion (11) to be cooled.

3. Housing structure (100, 200) according to either claim 1 or claim 2, **characterized in that** the cooling airflow is deflected by 180° in the transition from the first portion (15-1) to the second portion (15-2).

4. Housing structure (100, 200) according to any of the preceding claims, **characterized in that** the first partition wall (Z1) rests, at the downstream end thereof, in particular in the region of the downstream end (16) of the housing wall (10), in particular down stream of the cooling air channel inlet (15E), against the inner surface of the housing wall (10), in particular with a defined contact force, in order to axially delimit the cooling air channel (15) downstream, in particular in orderto axially delimit the first portion (15-1) of the cooling air channel (15) downstream.

5. Housing structure (100, 200) according to any of the preceding claims, **characterized in that** the second partition wall (Z2) rests, at the upstream end thereof, in particular in the region of the upstream end (17) of the housing wall (10), in particular upstream of a deflection in the cooling air channel inlet (15), against the inner surface of the housing wall (10), in particular with a defined contact force, in order to axially delimit the cooling air channel (15) upstream, in particularin order to axially delimit the second portion (15-2) of the cooling air channel (15) upstream.

6. Housing structure (100, 200) according to any of the preceding claims, **characterized in that** the cooling air channel outlet (15A) is formed by an opening, in particular by a gap, in particular by an at least partially circumferential gap, in particular by a completely circumferential gap, between the first partition wall (Z1) and the second partition wall (Z2).

7. Housing structure (100, 200) according to any of the preceding claims, **characterized in that** at least one sealing element (D, D') extending at least in part in the axial direction (a) and at least in part in the circumferential direction is arranged between the housing wall (10) and the inner wall (13), the sealing element (D, D') being arranged in particular in the radial direction (r) between an innermost partition wall (Z2) delimiting the cooling air channel (15) and the innerwall (13).

8. Fluid-flow machine, in particular turbomachine, in particular gas turbine, in particular low-pressure turbine, the fluid-flow machine having a housing structure (100, 200), **characterized in that** the housing structure (100, 200) is designed according to any of claims 1 to 7.

9. Fluid-flow machine according to claim 8, **characterized in that** the fluid-flow machine has a rotor stage (R) having rotor blades (L1) and a stator stage (S), arranged downstream of the rotor stage (R), having stator blades (L2), the housing portion of the housing structure (100, 200) to be cooled surrounding at least the rotor stage (R) at least in part, in particular radially, the fluid-flow machine, in particular the housing structure (100, 200), being designed such that cooling air (K) can be supplied to the cooling air channel (15) from the stator stage (S) arranged downstream of the rotor stage (R), in particularfrom radially outside the stator blades (L2) of the downstream stator stage (S), in particular at least in part counter to a main flow direction (HS) of a main flow in the main flow channel (H).

10. Fluid-flow machine according to either claim 8 or claim 9, **characterized in that** the inner wall (13) of the housing structure (100, 200) forms an outlet gap (19) at the downstream end thereof with at least one stator blade (L2) of the stator stage (S) adjoining the rotor stage (R), via which gap the cooling air (K) that has escaped from the cooling air channel (15) can be discharged into the main flow channel (H), in particular tog ether with a hot leakage flow (W) that has escaped from the main flow channel (H) due to leaks.

11. Method for cooling a housing portion (11) of a housing structure (100, 200) of a fluid-flow machine which is designed according to eitherclaim 9 or claim 10, **characterized in that** cooling air (K) is supplied via the cooling air channel inlet (15E) to the cooling air channel (15) of the housing structure (100, 200), of which the housing portion (11) to be cooled surrounds, at least in part, the rotor stage (R) arranged upstream of the stator stage (S), from a region radially outside the stator blades of the stator stage (S), the fluid-flow machine in particular being operated such that a cooling air pressure (P_{K0}) in this region is greater than an outlet pressure (P_{K2}, P_{L2}) of a flow in the region of the cooling air channel outlet (15A).

## Revendications

1. Structure de boîtier (100, 200) destinée à une machine à écoulement, en particulier destinée à une turbomachine, la structure de boîtier (100, 200) étant conçue pour entourer au moins partiellement de façon annulaire un canal d'écoulement principal (H) de la machine à écoulement, dans lequel sont disposées des aubes mobiles (L1) et des aubes directrices (L2), et pour délimiter la machine à écoulement par rapport à l'environnement (U), la structure de boîtier (100, 200) présentant une paroi extérieure de boîtier (10) formée par au moins une partie de boîtier et une paroi intérieure (13) et comprenant au moins un canal d'air de refroidissement (K) qui s'étend au moins partiellement dans un volume (V) entre la paroi de boîtier (10) et la paroi intérieure (13) et qui permet de refroidir une section de boîtier (11) à refroidir de la paroi de boîtier (10),
- la paroi de boîtier (10) étant conçue pourséparer la machine à écoulement de l'environnement (U),
- la paroi intérieure (13) étant disposée dans la direction radiale (r) à l'intérieurde la paroi de boîtier (10) et dans la direction radiale (r) de façon espacée de la paroi de boîtier (10) et étant conçue pour délimiter au moins partiellement le canal d'écoulement principal (H) et les aubes mobiles (L1) et aubes directrices (L2) qui y sont disposées,
- la section de boîtier (11) à refroidir présentant, par rapport à une direction d'écoulement principale (HS) dans laquelle un écoulement principal s'écoule à travers le canal d'écoulement principal (H), une extrémité amont (17) et une extrémité aval (16),
- le canal d'air de refroidissement (15) présentant une entrée de canal d'air de refroidissement (15E) permettant d'amenerde l'air de refroidissement (K) dans le canal d'air de refroidissement (15) et une sortie de canal d'air de refroidissement (15A) permettant d'évacuer l'air de refroidissement (K) hors du canal d'air de refroidissement (15), et
- le canal d'air de refroidissement (15) présentant une première section (15-1) et une seconde section (15-2), la structure de boîtier (100, 200) étant conçue de telle sorte que de l'air de refroidissement (K) amené au canal d'air de refroidissement (15) par l'intermédiaire de l'entrée de canal d'air de refroidissement (15E) s'écoule en direction de l'extrémité amont (17) de la section de boîtier (11) à refroidir dans la première section (15-1) et s'écoule en direction de l'extrémité aval (16) de la section de boîtier (11) à refroidirdans la seconde section (15-2),
un écoulement d'air de refroidissement étant dévié lors de la transition de la première section (15-1) vers la seconde section (15-2), l'entrée de canal d'air de refroidissement (15E) étant disposée dans la zone de l'extrémité aval (16) de la section de boîtier (11) à refroidir ou en aval de celle-ci, **caractérisée en ce que** la structure de boîtier (100, 200) présente au moins deux parois intermédiaires (Z1, Z2), à savoir une première paroi intermédiaire et une seconde paroi intermédiaire, lesquelles s'étendent au moins partiellement dans la direction axiale (a) et au moins partiellement dans la direction circonférentielle et sont disposées dans la direction radiale (r) entre la paroi de boîtier (10) et la paroi intérieure (13), le canal d'air de refroidissement (15) étant délimité, dans la première section (15-1), dans la direction radiale, par une surface intérieure de la section de boîtier (11) à refroidir de la paroi de boîtier (10), et par une surface extérieure de la première paroi intermédiaire (Z1) disposée dans la direction radiale (r) entre la paroi de boîtier (10) et la paroi intérieure (13), le canal d'air de refroidissement (15) étant délimité, dans la seconde section (15-2), dans la direction radiale (r) vers l'extérieur par une surface intérieure de la première paroi intermédiaire (Z1) et dans la direction radiale (r) vers l'intérieur par une surface extérieure de la seconde paroi intermédiaire (Z2) disposée dans la direction radiale (r) entre la première paroi intermédiaire (Z1) et la paroi intérieure (13).

2. Structure de boîtier (100, 200) selon la revendication 1, **caractérisée en ce que** la sortie de canal d'air de refroidissement (15A) est également disposée dans la zone de l'extrémité aval (16) de la section de boîtier (11) à refroidir, au niveau de l'extrémité aval (16) de la section de boîtier (11) à refroidir, ou en aval de l'extrémité aval (16) de la section de boîtier (11) à refroidir.

3. Structure de boîtier (100, 200) selon la revendication 1 ou 2, **caractérisée en ce que** l'écoulement d'air de refroidissement est dévié de 180° lors de la transition de la première section (15-1) à la seconde section (15-2).

4. Structure de boîtier (100, 200) selon l'une des revendications précédentes, **caractérisée en ce que** la première paroi intermédiaire (Z1) repose, avec son extrémité aval, en particulier dans la zone de l'extrémité aval (16) de la paroi de boîtier (10), en particulier en aval de l'entrée de canal d'air de refroidissement (15E), contre la surface intérieure de la paroi de boîtier (10), en particulieravec une force de pressage définie, afin de délimiter axialement le canal d'air de refroidissement (15) en aval, en particulier afin de délimiter axialement la première section (15-1) du canal d'air de refroidissement (15) en aval.

5. Structure de boîtier (100, 200) selon l'une des revendications précédentes, **caractérisée en ce que** la seconde paroi intermédiaire (Z2) repose, avec son extrémité amont, en particulier dans la zone de l'extrémité amont (17) de la paroi de boîtier (10), en particulier en amont d'une déviation dans le canal d'air de refroidissement (15), contre la surface intérieure de la paroi de boîtier (10), en particulier avec une force de pressage définie, afin de délimiter axialement le canal d'air de refroidissement (15) en amont, en particulier afin de délimiter axialement la seconde section (15-2) du canal d'air de refroidissement (15) en amont.

6. Structure de boîtier (100, 200) selon l'une des revendications précédentes, **caractérisée en ce que** la sortie de canal d'air de refroidissement (15A) est formée par une ouverture, en particulier par une fente, en particulier par une fente au moins partiellement périphérique, en particulier par une fente entièrement périphérique, entre la première paroi intermédiaire (Z1) et la seconde paroi intermédiaire (Z2).

7. Structure de boîtier (100, 200) selon l'une des revendications précédentes, **caractérisée en ce qu'au** moins un élément d'étanchéité (D, D'), lequel s'étend au moins partiellement dans la direction axiale (a) et au moins partiellement dans la direction circonférentielle, est disposé radialement entre la paroi de boîtier(10) et la paroi intérieure (13), l'élément d'étanchéité (D, D') étant disposé, en particulier dans la direction radiale (r), entre une paroi intermédiaire la plus intérieure (Z2), délimitant le canal d'air de refroidissement (15), et la paroi intérieure (13).

8. Machine à écoulement, en particulier turbomachine, en particulierturbine à gaz, en particulier turbine basse pression, dans laquelle la machine à écoulement présente une structure de boîtier (100, 200), **caractérisée en ce que** la structure de boîtier(100,200) est conçue selon l'une des revendications 1 à 7.

9. Machine à écoulement selon la revendication 8, **caractérisée en ce que** la machine à écoulement présente un étage de rotor (R) comportantdes aubes mobiles (L1) et un étage de stator (S) disposé en aval de l'étage de rotor (R) et comportant des aubes directrices (L2), la section de boîtier à refroidir de la structure de boîtier (100, 200) entourant au moins partiellement, en particulier radialement, au moins l'étage de rotor (R), la machine à écoulement, en particulier la structure de boîtier (100, 200), étant conçue de telle sorte que de l'air de refroidissement (K) peut être amené au canal d'air de refroidissement (15) depuis l'étage de stator (S) disposé en aval de l'étage de rotor (R), en particulier depuis une zone radialement à l'extérieur des aubes directrices (L2) de l'étage de stator (S) en aval, en particulier au moins partiellement à l'encontre d'une direction d'écoulement principale (HS) d'un écoulement principal dans le canal d'écoulement principal (H).

10. Machine à écoulement selon la revendication 8 ou 9, **caractérisée en ce que** la paroi intérieure (13) de la structure de boîtier (100, 200), au niveau de son extrémité aval, et au moins une aube directrice (L2) de l'étage de stator (S) adjacent à l'étage de rotor(R) forment une fente d'évacuation (19), par l'intermédiaire de laquelle l'air de refroidissement (K) s'échappant du canal d'air de refroidissement (15) peut être évacué dans le canal d'écoulement principal (H), en particulier conjointement avec un écoulement de fuite chaud (W) sorti du canal d'écoulement principal (H) en raison de fuites.

11. Procédé de refroidissement d'une section de boîtier (11) d'une structure de boîtier (100, 200) d'une machine à écoulement conçue selon la revendication 9 ou 10, **caractérisé en ce que** de l'air de refroidissement (K) provenant d'une zone radialement à l'extérieur des aubes directrices de l'étage de stator (S) est amené au canal d'air de refroidissement (15) de la structure de boîtier (100, 200), dont la section de boîtier(11) à refroidir entoure au moins partiellement l'étage de rotor (R) disposé en amont de l'étage de stator (S), par l'intermédiaire de l'entrée de canal d'air de refroidissement (15E), la machine à écoulement étant actionnée à cet effet en particulier de sorte qu'une pression d'air de refroidissement (P_{K0}) dans cette zone est supérieure à une pression d'évacuation (P_{K2}, P_{L2}) d'un écoulement dans la zone de la sortie de canal d'air de refroidissement (15A).
